# EUROPÄISCHE PATENTSCHRIFT

(11) **EP 0 382 707 B1**
(45) Veröffentlichungstag und Bekanntmachung des Hinweises auf die Patenterteilung: **13.10.1993**
(21) Anmeldenummer: 90890018.6
(22) Anmeldetag: 29.01.1990
(51) Int. Cl.: B65G 67/60

(54) **Krananlage mit stetigem Fördersystem für den Stückguttransport**
Crane installation with a continuous conveying system for transporting piece goods
Installation de grue avec système de convoyeur continu pour des colis de détail

(30) Priorität: 02.02.1989 AT 213/89
(43) Veröffentlichungstag der Anmeldung: 16.08.1990
(73) Patentinhaber: Jonke, Hans, Dr., A-1040 Wien (AT)
(72) Erfinder: Jonke, Hans, Dr., A-1040 Wien (AT)

(56) Entgegenhaltungen:
- DD-A- 79 448
- DE-A- 2 622 399
- DE-A- 2 825 553
- DE-B- 1 290 875
- US-A- 3 589 499
- US-A- 4 830 172

## Beschreibung

Die Erfindung betrifft eine Krananlage gemäß dem Oberbegriff des Patentanspruches 1.

Bekannte fahrbare Schiffsentlader, wie nach der DE-A-29 32 113 oder der DE-A-30 29 863, zeigen an einem Kran abgehängte Steilförderer mit einem L-förmigen Aufnahmearm für das Schüttgut. Der Steilförderer ist als Kratz- bzw. Bechergurt ausgebildet und fördert Schüttgut von der Aufnahme im Schiff auf einen, dem Förderband des Auslegers vorgeschalteten, Kreisförderer. Diese Übergabe des Schüttgutes im oberen Bereich des Steilförderers erfolgt durch Abwurf in eine Schurre und weiter auf den Kreisförderer. Von dort erfolgt der Austrag des Schüttgutes, wie aus der DE-A-24 56 260 hervorgeht, durch sich drehende Mitnehmerschaufeln, die das Schüttgut einer Bodenöffnung des stillstehenden Kreisfördertroges zuführen.

Eine ähnliche Verteilanlage für Schüttgut wurde aus der DE-A-24 47 600 bekannt, wo ein drehbar angeordneter Steilförderer das Schüttgut über eine schräg angeordnete Schurre einem drehbaren Kreisförderer aufgibt. Den Austrag des Schüttgutes aus dem Kreisförderer auf einen Bandförderer übernimmt in diesem Fall ein Räumrad, das mit seinen Räumarmen in den Trog des Kreisförderers eingreift.

Alle vorgenannten Einrichtungen sind nur für den reinen Transport von Schüttgütern in Entladerichtung geeignet, wobei das Schüttgut vom Steilförderer abgeworfen und über Rutschen oder Schurren weitergeleitet wird. Bei einem Transport von Stückgut, wie beispielsweise Säcken oder Schachteln, käme es zu schwersten Beschädigungen bei der Übergabe vom Steilförderer auf den Kreisförderer aufgrund der Fallhöhen in die Schurren. Außerdem ist eine Umkehrung der Förderrichtung zur Schiffsbeladung mit den vorgenannten Einrichtungen nicht möglich, da alle diese Anlagen nur in Entladerichtung funktionsfähig sind.

Für die Verladung von Stückgut wurde in der DE-A-12 74 505 bereits vorgeschlagen, dem Steilförderer das Stückgut in gleichen Zeitabständen durch Taktbänder zuzuführen. Die genannte Einrichtung erlaubt jedoch nur das Beladen von Schiffen und kein Schwenken der Ladestation im Schiff.

Aus der DE-A-26 22 399 ist eine der erfindungsgemäßen Krananlage ähnliche Anlage bekannt, und zwar ein Senkrechtförderer zum Be- und/oder Entladen von Schiffen mit Stück- und/oder Schüttgütern, mit einer in einem Traggestell angeordneten Transportbahn für den senkrechten Transport des Transportgutes, die am bodenseitigen Ende mit einer Transportgutaufnahme- und/oder -abgabeeinrichtung und am oberen Ende mit einem feststehenden Transportgutzuführ- und/oder -ableitband in Verbindung steht. Das Traggestell mit der senkrechtfördernden Transportbahn wird mit seinem oberen Ende durch ein feststehendes Traggerüst gehalten und ist in diesem um seine senkrechte Achse um 360° drehbar ausgebildet. Mit dem Traggestell im Abgabe- bzw. Zuführbereich der Transportbahn fest verbunden liegt ein Gurtförderband, das an dem dem Transportbahnende abgekehrten Ende mit einem plattenförmigen senkrechten Abstreifer versehen ist, der oberhalb des Gutförderbandes angeordnet und um seine senkrechte Mittelachse verschwenkbar ist und das zu beiden Seiten seines Endbereiches Überleitbahnen aufweist. Unterhalb des Gurtförderbandes ist ein ebener Drehteller mit einer mittigen Durchbrechung zum Hindurchführen der Transportbahn und mit einem oberhalb des Drehtellers liegenden, das Transportgut auf das feststehende Transportgutzuführ- und/oder -ableitband ableitenden, plattenförmigen, um seine senkrechte Mittelachse verschwenkbaren Abstreifer angeordnet. Diese Fördereinrichtung ist komplex aufgebaut und nicht ohne weiteres für einen Be- und Entladebetrieb einzusetzen bzw. umzurüsten.

Die Erfindung bezweckt die Vermeidung der Nachteile und Schwierigkeiten der bekannten Anlage und stellt sich die Aufgabe, eine Einrichtung der eingangs genannten Art zu erstellen, bei der ein das Stückgut schonender Transport ohne Fallhöhen mit kontinuierlich hoher Förderleistung in beiden Förderrichtungen möglich ist und kurzzeitig auftretende Unterschiede der Förderfrequenzen ausgeglichen werden können.

Weiters soll die Aufgabe/Abnahme der Stückgüter aus/in beliebiger Richtung erfolgen können, wozu ein Verdrehen bzw. Ausrichten der Vertikalförderstrecke mit ihrem Aufnahmearm um ihre Förderrichtung erforderlich ist. Darüber hinaus werden mit der Erfindung wirtschaftlich einfachere Lösungen angestrebt als sie durch den Einsatz von Spiralfördersystemen für den Vertikaltransport bekannt sind.

Diese Aufgabe wird bei einer gattungsgemäßen Krananlage erfindungsgemaß mit dem in Kennzeichen des Patentanspruches 1 angeführten Merkmalen gelöst.

Als besonders vorteilhaft wird die Anbringung zweier Kreisförderer am oberen Ende des Steilförderers für einen Wechsel des Transportes der Stückgüter in beide Transportrichtungen erachtet. Für eine Änderung der Förderrichtung von z.B. Schiffsbe- auf Schiffsentladung dienen zwei umschaltbare Förderweichen. Die Weiterbewegung des Stückgutes erfolgt ohne Energieaufwand durch einfaches Abrutschen über die Kreisförderer. Durch eine Änderung der Drehgeschwindigkeit des Kreisförderers ist die Möglichkeit einer Pufferwirkung gegeben, um ein kurzzeitig auftretendes Stückgutüberangebot wieder abbauen zu können, ohne das das Stückgut zubringende Förderband abbremsen oder stillsetzen zu müssen. Diese Maßnahme gewährt somit einen hohen wirtschaftlichen Einsatz.

Weitere vorteilhafte Ausgestaltungen des Erfindungsgegenstandes sind der folgenden Beschreibung und den Unteransprüchen entnehmbar.

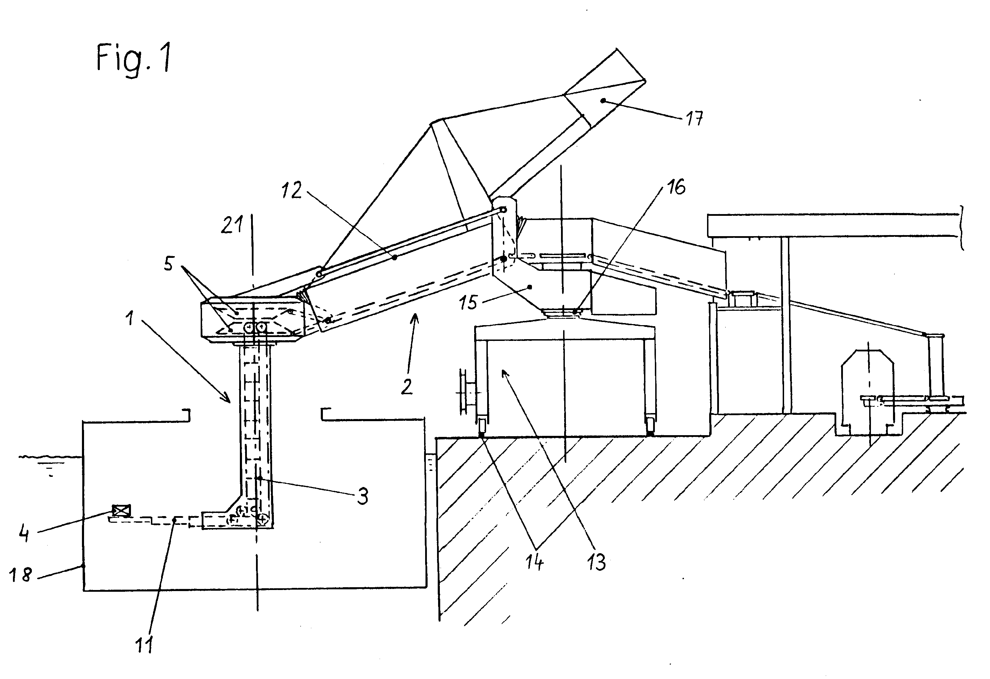

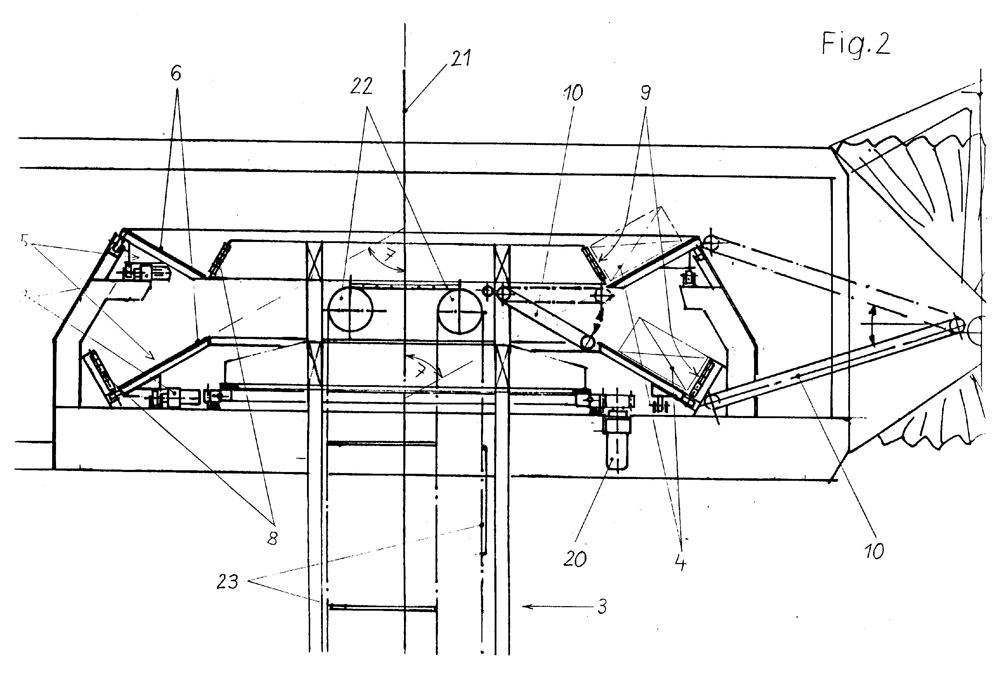

Die Erfindung wird nachstehend an Hand der Zeichnung näher erläutert, wobei die Fig. eine Seitenansicht einer als Schiffsentladekran ausgebildeten Einrichtung und die Fig. 2 einen vergrößert dargestellten Bereich der Übergabestelle vom Steilförderer zum Kreisförderer zeigt.

Die Erfindung wird beispielhaft an einem fahrbaren Auslegerkran für die Schiffsent- und -beladung veranschaulicht. Eine als Portal ausgebildete Tragkonstruktion 13 ist auf Schienen 14 entlang der Kaikante verfahrbar. Auf dem Portal sitzt ein mittels eines Drehlagers 16 schwenkbarer C-förmiger Turm 15, an dem ein Kranausleger 12 und ein Gegengewicht 17 angelenkt sind. Der Kranausleger 12 trägt an seinem vorderen Ende einen Steilförderer 3.

Der Steilförderer 3 arbeitet als Paternoster mit den Plattformen 23, welche in den Endlagen über Umlenkräder 22 geführt werden und ermöglicht so einen kontinuierlichen Transport des Stückgutes 4 auf der Vertikalförderstrecke 1. Diese Art der Stückgutförderung ist an sich bekannt und wird daher nicht näher erläutert. Zur Aufgabe des Stückgutes 4 in den Steilförderer 3 dient ein Aufnahmearm der L-förmig vom Steilförderer 3 absteht, mit diesem um die vertikale Drehachse 21 schwenkbar ist und, um die Zugänglichkeit im Schiffskörper zu erhöhen, auch geneigt bzw. um eine horizontale Achse schwenkbar angeordnet sein kann, wobei seine Förderstrecke aus einem teleskopierbaren Bandförderer besteht.

Für die Stückgutübergabe sind am oberen Ende des Steilförderers 3 zwei Kreisförderer 5 angeordnet, wobei der obere der beiden Kreisförderer dann in Aktion tritt, wenn das Schiff 18 beladen werden soll. Dazu werden die beiden Förderweichen 10 in die obere, strich-punktiert gezeichnete Stellung gebracht (Fig.2) Nun kann das Stückgut 4 vom Band des Kranauslegers 12 kommend, auf die Oberfläche 6 des oberen Kreisförderers 5 befördert werden, dessen innerer Rand in der Höhe der Umlenkräder angeordnet ist und rutscht auf Grund der schiefen Ebene (Winkel 7) des kegelstumpfförmigen Kreisförderers nach unten, bis es am Führungsbord 8 zum Aufliegen kommt.

Das Führungsbord 8 ist gleichfalls als Kegelstumpf ausgebildet und besitzt an seinem Umfang einen oder mehrere verschließbare Durchlässe 9. Um nun die Durchlässe 9 bei einer Verdrehung des Steilförderers 3 den Förderweichen 10 und anschließenden Horizontalförderstrecken gegenüberstellen zu können, sind sowohl die Führungsborde 8, als auch die Oberfläche 6 der Kreisförderer 5 verdrehbar angeordnet. Von der Förderweiche 10 bzw. einem daran anschließenden kurzen Horizontalförderband wird nun im Takt der sich senkenden Plattformen 23 des Steilförderers 3 das Stückgut 4 auf den Steilförderer 3 aufgeschoben und auf der Vertikalförderstrecke 1 abwärts transportiert.

Die Dreh-Antriebe 19 für die Kreisförderer 5 und der Drehantrieb 20 für den Steilförderer ermöglichen deren volle Drehbarkeit (360°) unabhängig voneinander. Für die umgekehrte Förderrichtung (Schiffsentladung) werden die beiden Förderweichen 10 umgelegt.

Die Erfindung beschränkt sich nicht auf das in den Zeichungsfiguren dargestellte Ausführungsbeispiel eines Wippdrehkranes in der besonderen Ausgestaltung eines Schiffsentladekranes. So ist für das erfindungsgemäße Fördersystem jede beliebige Tragkonstruktion für den Kran möglich, die auf Hochseehäfen, Binnenhäfen oder jedem anderen beliebigen Umschlagplatz (z.B. Bahnhöfen) zum Einsatz kommen kann.

## Patentansprüche

1. Krananlage mit stetigem Fördersystem für den Stückguttransport, insbesondere von Säcken, Schachteln, Bündeln od.dgl., im wesentlichen bestehend aus einer oder mehreren Vertikalförderstrecken (1) und den dazwischen angeordneten Horizontalförderstrecken (2), mit horizontaler oder davon abweichender Förderbahn, wobei mindestens eine Vertikalförderstrecke (1) als Steilförderer (3), z.B. mit L-förmigem Aufnahme-/Abgabearm, in einem drehbaren Gehäuse ausgebildet ist und am oberen und/oder unteren Ende des Steilförderers (3) ein horizontal angeordneter Drehteller bzw. Kreisförderer (5) vorgesehen ist, der stetig und unabhängig von einer Drehbewegung bzw. Ausrichtung des Steilförderers (3) umläuft, dadurch gekennzeichnet, daß die das Stückgut (4) tragende, kegelstumpfförmige Oberfläche (6) des Kreisförderers (5) einen von 90° verschiedenen Winkel (7) zur Drehachse (21) des Steilförderers (3) einschließt und somit eine in Richtung auf die Drehachse ansteigende oder abfallende Oberfläche (6) zeigt, daß der innere, dem Steilförderer (3) zugewandte Umfangsrand der Oberfläche (6) in der Höhe der Umkehrstelle (Umlenkräder 22) der das Stückgut (4) tragenden Plattformen (23) des Steilförderers (3) angeordnet ist und daß längs des tiefergelegenen Umfangrandes des Kreisförderers (5) ein Führungsbord (8) mit Durchlässen (9) für Stückgut (4) angeordnet ist.

2. Krananlage nach Anspruch 1, dadurch gekennzeichnet, daß am oberen und/oder unteren Ende des Steilförderers (3) ein weiterer horizontal angeordneter Drehteller bzw. Kreisförderer (5), vorgesehen ist, dessen Oberfläche (6) eine zur Oberfläche (6) des Kreisförderers (5) entgegengesetzte Neigung besitzt und längs dessen tiefer gelegenen Umfangsrand ein weiteres Führungsbord (8) mit Durchlässen (9) für Stückgut (4) angeordnet ist.

3. Krananlage nach Anspruch 1 oder 2, dadurch gekennzeichnet, daß jedes Führungsbord (8) als Kegelstumpffläche ausgebildet ist und sich im wesentlichen senkrecht auf die Oberfläche (6) des jeweiligen Kreisförderers (5) erstreckt und daß das gegenüber der Oberfläche (6) des Kreisförderers (5) verdrehbare Führungsbord (8) an einer oder mehreren Stellen verschließbare Durchlässe (9) aufweist.

4. Krananlage nach Anspruch 3, dadurch gekennzeichnet, daß die Führungsborde (8) von angetriebenen oder nicht angetriebenen Rollen, Walzen, Bändern, Gleitschienen od.dgl. gebildet sind.

5. Krananlage nach Anspruch 2, dadurch gekennzeichnet, daß bei Anordnung von zwei unterschiedlich geneigte Oberflächen (6) besitzenden Kreisförderern (5) an einem Ende des Steilförderers (3) für den Transport des Stückgutes (4) in beide Richtungen (Be- bzw. Entladen) zwischen der Vertikalförderstrecke (1) und den beiden Kreisförderern (5) sowie zwischen den beiden Kreisförderern (5) und der horizontalen Förderstrecke (2) jeweils eine zwischen den übereinander angeordneten Kreisförderern (5) umschaltbare Förderweiche (10) vorgesehen ist.

6. Krananlage nach einem der Ansprüche 1 bis 5, dadurch gekennzeichnet, daß die Vertikalförderstrecken (1), die Horizontalförderstrecken (2) und der (die) Kreisförderer (5) durch Rollbahnen, Endlosbänder, Schuppenbänder, Ketten, Seile od.dgl. gebildet sind.

7. Krananlage nach einem der Ansprüche 1 bis 6, dadurch gekennzeichnet, daß die Horizontalförderstrecke (2) zwischen den Vertikalförderstrecken (1) im Inneren eines Kranauslegers (12) verläuft.

8. Krananlage nach einem der vorhergehenden Ansprüche, dadurch gekennzeichnet, daß als Tragkonstruktion (13) für die Vertikal- und Horizontalförderstrecken (1,2) sowie den (die) Kreisförderer (5) Portal-, Halbportal-, Brücken- und Wippdrehkrane mit starrem oder in horizontaler Richtung verschiebbaren oder klappbarem oder teleskopierbarem Kranausleger (12) vorgesehen sind.

9. Krananlage nach einem der vorhergehenden Ansprüche, dadurch gekennzeichnet, daß am unteren Ende des Steilförderers (3) der Aufnahmearm (11) eine horizontale oder geneigte bzw. schwenkbare, insbesondere auch teleskopierbare Förderstrecke bildet.

## Claims

1. Crane system with a continual conveyor system for the transshipment of discrete items of cargo, in particular sacks, cases, bundles or the like, essentially consisting of one or a plurality of vertical conveyor sections (1) adjoining horizontal conveyor sections (2) with a horizontal or thereof declining conveyor lane; whereby at least one vertical conveyor section (1) is configurated as a vertical conveyor (3) in a rotatable housing, as purpose with an L-shaped pick up/take off arm; and a horizontally arranged turn plate resp. circular conveyor (5) running continually and independently of the rotation or orientation of the vertical conveyor(3), arranged at the upper and/or lower end of said vertical conveyor,
**characterized in**
**that** the truncated conical surface (6) of the circular conveyor (5) supporting the cargo(4), encloses an angle (7) different from 90° against the axis of rotation (21) of the vertical conveyor (3), and therewith is forming an ascending or descending surface (6) in direction of said axis of rotation and
**that** the inner edge of said support surface (6) is arranged at the level of transition point (reversing wheel 22) of the platforms(23) of said vertical conveyor (3) that carries the cargo (4) and
**that** there is a guide rail (8) with openings (9) for cargo (4) arranged along the lowermost periphery edge of the circuit conveyor (5).

2. Crane system according to claim 1, characterized in that a further horizontal turn plate resp. circular conveyor (5) is arranged at the upper and/or lower end of said vertical conveyor (3), whose surface (6) has an opposite inclination to said surface (6) of said circuit conveyor (5) and where a further guide rail (8) with openings (9) for cargo (4) is arranged along its lowermost periphery edge.

3. Crane system according the claims 1 or 2, characterized in that each guide rail (8) is configured as a truncated conical surface and extends essentially perpendicular to the surface (6) of the corresponding circular conveyor (5), and wherein the guide rail (8) can be rotated relative to the surface of the circular conveyor (5) and incorporates one or a plurality of closeable openings.

4. Crane system as defined in claim 3, characterized in that the guide rails (8) are formed by driven or non-driven rollers, belts, slides, rails, or the like.

5. Crane system as defined in claim 2, characterized in that for the arrangement of two circular conveyors (5) with different inclined surfaces (6) on one end of the vertical conveyor (3) for transporting cargo (4) in both directions (for loading respectively unloading), switch-conveyors (10) are provided between said vertical conveyor section (1) and both circular conveyors (5), as well as between both circular conveyors (5) and the horizontal conveyor section (2), each of them shiftable between said circular conveyors (5) located one above the other.

6. Crane system as defined in the claims 1 to 5, characterized in that the vertical conveyor sections (1), the horizontal conveyor sections (2) and the circular conveyor(s) (5) are formed by roller tracks, endless belts, scoop belts, chains, cables, or the like.

7. Crane system as defined in the claims 1 to 6, characterized in that horizontal conveyor section (2) between the vertical conveyor sections (1) are located in the interior of the crane boom.

8. Crane system as defined in any one of the above claims, characterized in that gantry, semi-gantry, travelling, and level-luffing cranes with fixed or horizontally displaceable crane booms or with folding or telescoping crane boom (12) are provided as supporting structure (13) for the vertical- und horizontal conveyor sections (1, 2) as well as for the circular conveyors (5).

9. Crane system according to any one of the above claims, characterized in that at the lower end of the vertical conveyor (3) a pick-up (11) forms a horizontally or inclined or pivoting conveyor section, which can be in particular telescope.

## Revendications

1. Installation de grue à système de convoyeur continu pour les colis de détail, à savoir des sacs, boîtes, bottes et c., comprenant en principe une ou plusieures voies de transbordement verticale(s) (1) et les voies de transbordement horizontales (2) intercalées à chemin de transport horizontal ou écartant. Au moins une des voies de transbordement verticales (1) est formée comme covoyeur vertical (3), par exemple à un bras de chargement ou de déchargement en forme de L, monté dans une cage rotative. A l'extémité supérieure et ou l'extrémité inférieure du convoyeur vertical (3) se trouve un plateau tournant respectivement un convoyeur circulant (5) horizontalement aligné, travaillant continuellement et indépendamment du mouvement rotatif respectivement du sens du convoyeur vertical (3), caractérisé par le fait que la surface de forme de tronc de cône (6) du convoyeur circulant (5) portant les colis de détail présente un angle différent de 90 degrés (7) par rapport à l'axe rotatif (21) du covoyeur vertical (3), présentant ainsi une surface (6) en montée ou en pente dans la direction de l'axe rotatif, de sorte que le bord de la périphérie intérieure, tourné vers le convoyeur vertical (3) de la surface (6) est fixé au niveau de la station de renvoi (roues de renvoie 22) des plate-formes (23) du convoyeur vertical (3) portant les colis de détail (4) et qu'il y a le lomg du bord de la périphérie, situé plus bas, du convoyeur circulant (5) une bande conductrice (8) munie de passages (9) pour les colis de détail (4).

2. Installation de grue selon revendication 1, caractérisée par le fait qu'un plateau tournant respectivement un convoyeur circulaire (5) supplémentaire, aligné horizontalement est prévu à l'extrémité supérieure et/ou inférieure du convoyeur vertical (3), que la surface (6) (du plateau tournant) a une pente inverse à la surface du convoyeur circulant (5) et que le long de son bord périphérique plus bas se trouve une autre bande de guidage (8) munie de passages (9) pour les colis de détail (4).

3. Installation de grue selon revendication 1 ou 2, caractérisée par le fait que chaque bande de guidage (8) a la forme d'un cône tronqué et se trouve en principe en position verticale sur la surface (6) du convoyeur circulant (5) et que la bande de guidage (8), contournable par rapport à la surface (6) du convoyeur circulant (5), est munie en un ou plusieurs endroits de passages (9) pouvant être fermés.

4. Installation de grue selon revendication 3, caractérisée par le fait que les bandes de guidage (8) sont formées par des rouleaux, des cylindres, des bandes, des glissières ou des dispositifs semblables, actionnés ou non.

5. Installation de grue selon revendication 2, caractérisée par le fait que lors de l'existence de deux convoyeurs circulant (5), ayant des surfaces (6) de pente différente, des aiguilles de transport (10) commutables sont prévues, une à chaque endroit, entre les convoyeurs circulant (5) superposés, à une extrémité du convoyeur vertical (3) entre la voie de transbordement verticale (1) et les deux convoyeurs circulant (5) et la voie de transbordement horizontale (2) pour le transport des colis de détail (4) dans les deux sens (chargement et déchargement).

6. Installation de grue selon une des revendications 1 à 5, caractérisée par le fait que les voies de transbordement verticales (1), les voies de transbordement horizontales (2) et le (les) convoyeur(s) circulant (5) sont formés par des voies glissantes, des voies sans fin, des bandes à écailles, des chaînes, des câbles ou des dispositifs semblables.

7. Installation de grue selon une des revendications 1 à 6, caractérisée par le fait que la voie de transbordement horizontale (2) se trouve entre les voies de transbordement verticales (1) à l'intérieur d'une flèche de grue (12).

8. Installation de grue selon une des revendications pré-citées, caractérisée par le fait que la construction de support (13) pour les voies de transbordement verticales et horizontales (1,2) de même que pour le (les) convoyeur(s) circulant (5) sont des grues portiques, des grues à semi-portiques, des ponts-grue et des grues à volée variable, ayant une flèche de grue (12) fixe ou horizontalement déplaçable, pliant ou étirable.

9. Installation de grue selon une des revendications pré-citées, caractérisée par le fait que le bras de transport (11) forme une voie de transbordement horizontale, pendue respectivement orientable et étirable.
